# EUROPEAN PATENT APPLICATION

(11) **EP 1 076 393 A2**
(43) Date of publication of application: **14.02.2001**
(21) Application number: 00306500.0
(22) Date of filing: 31.07.2000
(51) Int. Cl.: H02J 1/14

(54) **Hot-pluggable power component with pre-charging circuit**

(30) Priority: 13.08.1999 US 374575
(71) Applicant: LUCENT TECHNOLOGIES INC., Murray Hill, New Jersey 07974-0636 (US)
(72) Inventor: He, Jin, Plano, Texas 75025 (US); Jorgenson, Gregory P., 331 Quinlan, Texas 75474 (US)
(74) Representative: Buckley, Christopher Simon Thirsk

(57) **Abstract**

An improved pre-charge circuit is described for pre-charging the output capacitors in hot-pluggable power components including switch-mode rectifiers. When the hot-pluggable component is inserted into a power plant a pre-charge pin connects the output capacitor (Cₒ) across the system bus (22, 24) through a current limiting resistor (R_{cp}) which determines the maximum pre-charging current through the output capacitor. Due to the resistance of the current limiting resistor and a pre-load and secondary bias circuit (30) connected across the output of the power component, the output capacitor is unable to charge to close enough of the system voltage to prevent a significant disturbance on the system bus when the power component is fully inserted. To allow the output capacitor to charge to a voltage closer to the system voltage, a resistance (R_{pc}) is placed in parallel with the current limiting resistor by means of a switch (Q_{pc}). The switch is turned on when the output is significantly charged, i.e. 70% to 90% of the system voltage. This resistance in parallel with the current limiting resistor reduces the effective resistance seen by the system bus through the pre-charge pin and allows the output capacitor to be charged to very near the system voltage.

## Description

### TECHNICAL FIELD OF THE INVENTION

The present invention relates to power components that are pluggable into electrical buses that have a voltage across them, also referred to as "hot" buses. Specifically, the present invention is an improved pre-charging circuit in such power components.

### BACKGROUND OF THE INVENTION

Large power distribution systems are often formed by a series of multiple, modular power components connected in parallel. The components are connected to a system bus that carries a voltage used by the entire power distribution system. For example, switch-mode rectifiers (SMRs) are widely used in large power distribution systems, such as telecommunications systems, to provide a regulated +24 volt or -48 volt power source for communication switching systems and to charge the battery back-up banks. Multiple SMRs, along with battery banks, the controller, and protective low voltage battery disconnect devices (LVBDs) are normally housed in a metal enclosure referred to as a bay or power plant.

Because power to the load equipment, such as the telecommunications switch, cannot be interrupted when any one of the power components fails or needs to be serviced, the power components in the power plant are designed to be connected to and disconnected from a system bus while the system bus is operational and carrying a voltage. A device designed to make this type of connection is referred to a "hot-pluggable" for its ability to be connected to a working electrical bus. When changing a power component, the power plant must continue to operate and meet the load's specified requirements, such as the power plant bus voltage regulation, which is not allowed to overshoot or undershoot the specified voltage by a more than predetermined percentage.

Undershoot is a major problem for hot-pluggable power components, specifically SMRs, because of the large output capacitance in the component used to filter out the switching noise and maintain the constant output voltage. When connected to a 'hot' bus the output capacitor must immediately draw a large current in order to charge, resulting in a significant drop of the voltage on the system bus. This drop in the system voltage would activate the power plant's under voltage protection and may cause the system to shut down. One method of minimizing the voltage drop at connection is to pre-charge the output capacitor with a limited charging current. This requires making a preliminary connection to the bus through a current limiting resistor, usually in series with a blocking diode, to impart a charge to the capacitor before the main circuitry is connected to the bus. The full connection to the bus bypasses the current limiting resistor allowing the power component to operate normally.

Unfortunately, many power components, particularly those in large power plants, have pre-load circuitry to maintain zero-voltage switching under light load currents and secondary bias circuitry that provides power to the on board communications and alarm circuits to keep the remote monitoring and communication between the power component and remote controller, even under input ac power failure. Both the pre-load and secondary bias circuitry are connected across the output capacitor bank, and form a voltage divider network with the current limiting resistor thereby reducing the effectiveness of the current limiting resistor pre-charge scheme by limiting the voltage that can appear across the output capacitor.

The value of the current limiting resistor must be fairly large to limit the inrush current during pre-charging. As a result, the voltage across the output capacitor of the power component will only be charged to 70% to 90% of the system bus voltage because of the relatively large voltage drop across the current limiting resistor. This difference between the system voltage and the pre-charged output capacitor's voltage will still result in a dip in the system voltage when the power component is fully connected to the system bus. If the power plant does not include a battery back up, this voltage dip could still result in a shut down of the power plant due to the under voltage condition on the system bus.

Accordingly, what is needed is an improved pre-charging circuit for hot pluggable power components that is able to charge the output capacitor of the power component enough to prevent a significant dip in the output voltage when the power component is connected to a hot system bus.

### SUMMARY OF THE INVENTION

The present invention provides a hot-pluggable power component, which can be inserted into an operating power plant without disturbing the system voltage or operation of other components in the power plant. The power component includes a large output capacitance that is pre-charged to close the system voltage by means of a pre-charging circuit. The pre-charging circuit is connected to the output capacitance using a pre-charging pin which places a current limiting resistor in series with the output capacitor to allow the output capacitor to charge while limiting the current drawn from the system bus. The presence of the pre-load and secondary bias circuitry and the size of the current limiting resistor, however, prevent the output capacitor from charging to a close enough voltage to the system voltage. To accommodate for this, after the output capacitor has been significantly charged through the current limiting resistor, another secondary pre-charge circuit places a resistance in parallel with the current limiting resistor. This effectively reduces the voltage divider seen by the system bus, thereby allowing the output capacitor to charge to a voltage very near the system voltage.

The secondary pre-charge circuit can be formed by a switch, which places either a discrete resistor, or its own internal resistance, in parallel with the current limiting resistor. The switch is activated after a predetermined delay to allow the output capacitor to pre-charge through the current limiting resistor. The switch is controlled by a threshold voltage set by a voltage divider to a voltage slightly above the turn on voltage of the switch. A resistor/capacitor network can be used with the threshold voltage to set the predetermined delay before the switch is activated. Once the output capacitor has been charged to very near the system voltage, the power component can be fully connected to the power plant without disturbing the system bus. The pre-charge circuitry is bypassed when the power component is fully connected to the system bus.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art will appreciate that they can readily use the disclosed conception and specific embodiment as a basis for designing or modifying other structures for carrying out the same purposes of the present invention. Those skilled in the art will also realize that such equivalent constructions do not depart from the spirit and scope of the invention in its broadest form.

### BRIEF DESCRIPTION OF THE DRAWINGS

For a more complete understanding of the present invention, reference is now made to the following descriptions taken in conjunction with the accompanying drawings, in which:
Figure 1A is a perspective view of the top, left side, and back of a hot pluggable power component according to the present invention;
Figure 1B is a left side view of the power component of Figure 1A; and
Figure 2 is a circuit diagram of a circuit for pre-charging the power component according to the present invention.

### DETAILED DESCRIPTION OF THE DRAWINGS

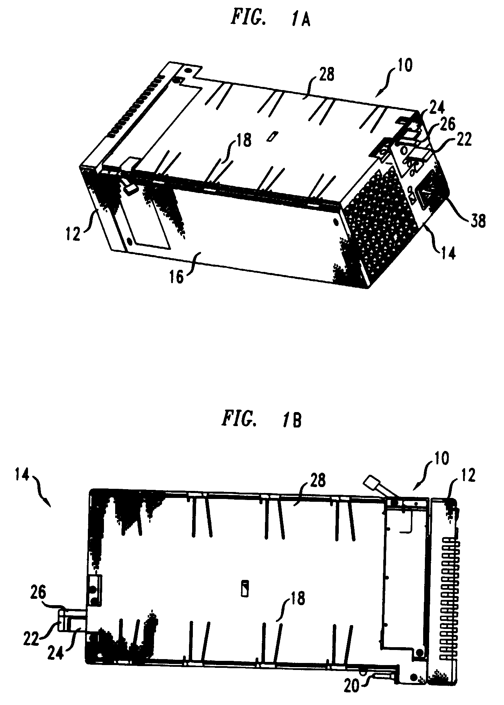

Referring now to Figure 1A and 1B, a power component according to the present invention is shown. Power component 10 includes a front cover 12, a back 14, and a cover 16. Front 12 includes the user interface and controls, not shown. Chasis 16 and left side cover 28 surround the internal components and can be formed from metal. Left side cover 28 includes spring board connections 18 which are designed to make connections with a metal surface to provide electromagnetic interference (EMI) shielding. Power component 10 also includes insertion screw 20 which is a multiple turn threaded screw and is designed to provide a delay in making the complete bus connections as will be described in greater detail below. AC connector 38 connects to an ac plug in the power plant and receives the input ac power used by the power component.

Power component 10 is a modular component designed to be inserted into a rack that forms a power plant. The power plant includes a system bus, to which back 14 of power component 10 connects. The connection with the system bus, which carries a system voltage, is made by positive terminal pin 22 and negative terminal pin 24. Pre-charge pin 26 extends beyond negative terminal pin 24 and makes a connection to the system bus along with positive terminal pin 22 in order to pre-charge the output capacitor of power component 10. Insertion screw 20 provides for the delay between the connection of pre-charge pin 26 and negative terminal pin 24.

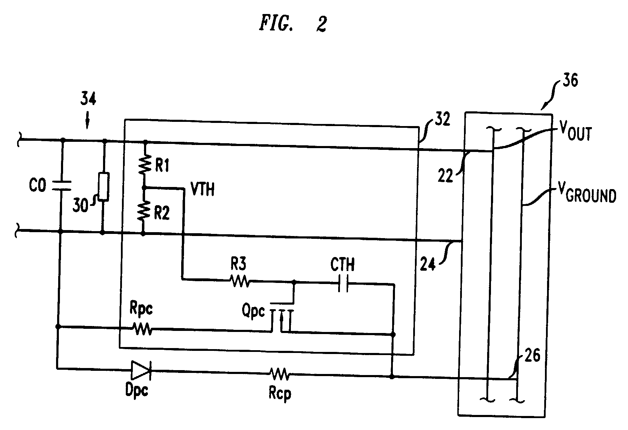

Power component 10 can be inserted into the power plant until it makes a connection with the system bus with positive terminal pin 22 and pre-charge pin 26. To make the connection with negative terminal pin 24, insertion screw 20 must be turned a predetermined number of times to provide a delay in connection of, for example, 30 seconds. The delay allows the pre-charge circuit of Figure 2, discussed below, to pre-charge the output capacitor to nearly the system voltage so that when the final connection is made there is not a significant drop in the system voltage.

Referring now to Figure 2, improved secondary pre-charge circuit 32 is shown with output circuitry 34 of power component 10 from Figure 1A and 1B. Output circuitry 34 of the power component consists of output capacitor Cₒ and pre-load and secondary bias circuit 30, which are connected across positive terminal pin 22 and negative terminal pin 24. Current limiting resistor R_{cl} and diode D_{pc} are connected to output circuitry 34 through pre-charge pin 26. As stated above, pre-load and secondary bias circuit 30 forms a voltage divider with current limiting resistor R_{cl} that prevents output capacitor Cₒ from completely pre-charging to the system voltage, also referred to as the output voltage, on dc bus 36. While the output voltage is shown here as +Vₒᵤₜ, one skilled in the art would easily understand that the output voltage could be a negative output voltage. Efforts to reduce the voltage divider by reducing the value of current limiting resistor R_{cl} are hampered by the fact that current limiting resistor R_{cl} must be of sufficient value to limit the inrush current at pre-charge so that output voltage Vₒᵤₜ does not dip below the predetermined threshold.

The pre-charge performance of power component 10 is improved by the addition of secondary pre-charge circuit 32. Secondary pre-charge circuit 32 is formed by pre-charge resistor R_{pc} and switch Q_{pc} connected in parallel with current limiting resistor R_{cl} and diode D_{pc}. Switch Q_{pc}, a low power field effect transistor (FET), is controlled by the voltage divider formed by resistors R1 and R2, which produce threshold voltage Vth. Threshold voltage Vth is chosen to be slightly larger than the turn on voltage for switch Q_{pc}, and charges capacitor Cth through resistor R3, such that the voltage across capacitor Cth will turn on switch Q_{pc} after a delay equal to one to three times the time constant of resistor R3 and capacitor Cth.

Secondary pre-charge circuit 32 acts to reduce the effective resistance of current limiting resistor R_{cl} by placing it in parallel with a resistance, here shown as pre-charge resistor R_{pc} after output capacitor Cₒ is significantly charged (from about 70% to 90% of Vₒᵤₜ), but still far enough from output voltage Vₒᵤₜ to cause problems. Reducing the effective resistance of current limiting resistor R_{cl} reduces the voltage across the lower portion of the voltage divider formed by current limiting resistor R_{cl} and pre-load and secondary bias circuitry 30. This allows output capacitor Cₒ to charge to a voltage very near that of output voltage Vₒᵤₜ (for example, 95% to 98% of Vₒᵤₜ) and close enough that dc bus 36 will not be adversely affected when negative terminal pin 24 contacts common terminal V_{ground} of dc bus 36. One skilled in the art will readily appreciate that while R_{pc} is shown as a discrete component, it is not necessary to have an actual resistor in secondary pre-charge circuit 32. The internal resistance of switch Q_{pc} could be used to accomplish the same function.

As can be seen from Figures 1A and 1B, when power component 10 is plugged into the power plant positive terminal pin 22 and pre-charge pin 26 contact the output voltage Vₒᵤₜ and common terminal V_{ground}, respectively, thereby engaging current limiting resistor R_{cl} and secondary pre-charge circuit 32. Negative terminal pin 24 does not make contact until insertion screw 20 is turned the appropriate number of times. Current flows to output capacitor Cₒ and pre-load and secondary bias circuit 30 through diode D_{pc} and current limiting resistor R_{cl}. Secondary pre-charge circuit 32 is not active because switch Q_{pc} is biased off since the voltage across capacitor Cth has not reached the turn-on voltage for switch Q_{pc}.

In this state, before switch Q_{pc} turns on, output capacitor Cₒ is allowed to slowly charge at a rate limited by current limiting resistor R_{cl}. Additionally, capacitor Cth is charged by threshold voltage Vth through resistor R3. The time constant of capacitor Cth and resistor R3 is chosen such that switch Q_{pc} turns on when output capacitor reaches the voltage allowed by the voltage divider formed by current limiting resistor R_{cl} and pre-load and secondary bias circuit 30. When switch Q_{pc} is turned on, output capacitor Cₒ can charge to very close to output voltage Vₒᵤₜ due to the reduction of the effective resistance of current limiting capacitor R_{cl}. Once the insertion screw 20 has been turned the appropriate amount of turns, negative terminal pin 24 contacts V_{ground}.

When negative terminal pin 24 is connected to dc bus 36, current limiting resistor R_{cl} and secondary pre-charge circuit 32 are bypassed, effectively removing them from the output of power component 10. Capacitor Cₒ has been charged to a voltage so close to that of output voltage Vₒᵤₜ that dc bus 36 is able to complete the charge of output capacitor Cₒ without adversely affecting the bus voltage or the operation of other components connected to dc bus 36.

All of the elements shown in Figure 1-2 are commonly available electrical components. Although particular references have been made to specific power components and output voltages, those skilled in the art should understand that power component 10 could be any component with a large output capacitance, all of which are well within the broad scope of the present invention. Similarly, while dc bus 36 has been referred to with a positive output voltage, such as +24V, the present invention is applicable to any output voltage, including negative output voltages such as -48V. Switch Q_{pc} can be any commonly available low-power switch, and while described herein as a FET, one skilled in the art would readily understand that any controllable switch could be used. Although the present invention has been described in detail, those skilled in the art should understand that they can make various changes, substitutions and alterations herein without departing from the spirit and scope of the invention in its broadest form

## Claims

1. A hot-pluggable power component connectable to a system bus carrying a system voltage, comprising:
a power circuit connectable to the system bus through an output capacitor; and
a pre-charging circuit connected to the power circuit to pre-charge the output capacitor before the power circuit is connected to the system bus, the pre-charging circuit formed by a current limiting resistor connected in parallel with a secondary pre-charging circuit, the secondary pre-charging circuit operable to allow additional pre-charging of the output capacitor beyond that allowed by the current limiting resistor.

2. The hot-pluggable power component of Claim 1 wherein the secondary pre-charge circuit includes a switch, which is operable to place a resistance in parallel with the current limiting resistor to reduce the effective resistance of the current limiting resistor, thereby allowing additional pre-charging of the output capacitor.

3. The hot-pluggable power component of Claim 2 wherein the switch is turned on by a threshold voltage after a delay corresponding to the current limiting resistor having significantly charged the output capacitor.

4. The hot-pluggable power component of Claim 3 wherein significantly charged is 70% to 90% of the system voltage.

5. The hot-pluggable power component of Claim 1 wherein the power component is a switch-mode rectifier.

6. The hot-pluggable power component of Claim 1 wherein the power circuit further includes a pre-load and secondary bias circuit.

7. The hot-pluggable power component of Claim 1 wherein the system voltage is +24V.

8. The hot-pluggable power component of Claim 1 wherein the system voltage is -48V.

9. A pre-charge circuit for a hot-pluggable power component which includes an output capacitor and connects to a system bus carrying a system voltage, comprising:
a current limiting resistor electrically connected to the output capacitor through a diode, and electrically connectable to the system bus through a pre-charge pin; and
a secondary pre-charge circuit including a switch operable to place a resistance in parallel with the current limiting resistor, the switch activated by a threshold voltage after a predetermined delay.

10. The pre-charge circuit of Claim 9 wherein the predetermined delay is formed by a resistor and capacitor connected to the threshold voltage.

11. The pre-charge circuit of Claim 10 wherein the threshold voltage is formed by a voltage divider connected in parallel with the output capacitor.

12. The pre-charge circuit of Claim 9 wherein the predetermined delay corresponds to the output capacitor having been charged to 70% to 90% of the system voltage through the current limiting resistor.

13. The pre-charge circuit of Claim 9 wherein the resistance is the internal resistance of the switch.

14. The pre-charge circuit of Claim 9 wherein the resistance is a discrete resistor.

15. A method for pre-charging an output capacitor in a hot-pluggable power component which is connectable to a system bus carrying a system voltage comprising:
a) connecting the power component to the system bus using a pre-charge pin;
b) pre-charging the output capacitor through a pre-charge circuit which includes a current limiting resistor connected to the pre-charge pin;
c) placing a resistance in parallel with the current limiting resistor to further charge the output capacitor; and
d) connecting the power component to the system bus to bypass the pre-charging circuit.

16. The method of Claim 15 wherein the resistance is placed in parallel with the current limiting resistor using a switch activated after a predetermined delay.

17. The method of Claim 16 wherein the predetermined delay is formed by a threshold voltage and a resistor and a capacitor chosen to form a desired RC time constant.

18. The method of Claim 16 wherein the predetermined delay allows the output capacitor to charge to about 70% to 90% of the system voltage.

19. The method of Claim 15 wherein the power component is a switch-mode rectifier.
